Europäisches Patentamt

European Patent Office

Office européen des brevets

(11) Publication number: **0 122 065**
**B1**

(12) EUROPEAN PATENT SPECIFICATION

(45) Date of publication of patent specification: **03.02.88**

(21) Application number: **84301743.5**

(22) Date of filing: **14.03.84**

(51) Int. Cl.⁴: **B 65 G 47/30**

(54) Apparatus for arranging articles in groups.

(30) Priority: **15.03.83 US 475522**

(43) Date of publication of application:
**17.10.84 Bulletin 84/42**

(45) Publication of the grant of the patent:
**03.02.88 Bulletin 88/05**

(84) Designated Contracting States:
**BE DE FR GB IT NL SE**

(56) References cited:
**CH-A- 617 150**
**US-A-3 502 194**

(73) Proprietor: **THE MEAD CORPORATION**
**Mead World Headquarters Courthouse Plaza**
**Northeast**
**Dayton Ohio 45463 (US)**

(72) Inventor: **Calvert, Rodney K.**
**5422 Mt. Vernon Way**
**Dunwoody Georgia 30338 (US)**
Inventor: **Fishback, Alton J.**
**2283 Weslan Drive**
**Austell Georgia 30001 (US)**

(74) Representative: **Hepworth, John Malcolm**
**J.M. Hepworth & Co. 36 Regent Place**
**Rugby Warwickshire CV21 2PN (GB)**

# Description

This invention relates to apparatus for manipulating a single row of articles being moved along a predetermined path into groups of articles in a positively controlled manner.

CH—A—617 150 discloses an apparatus for arranging articles in groups comprising an infeed conveyor for continuously moving a single row of articles along a feed path, a plurality of pushers movable along both sides of the article feed path at a velocity which is less than the velocity of the infeed conveyor and slidable in a direction transverse thereto. Each pusher is engagable with a longitudinal side of preselected ones of the articles for imparting transverse movement thereto and pusher withdrawing means are engagable in sequence with the pushers to impart transverse movement thereto in a direction away from the feed path.

The present invention provides an apparatus for arranging articles in two laterally spaced streams from a single stream, which apparatus comprises a conveyor for carrying said articles, chains on each side of the conveyor having longitudinally spaced pushers which are laterally movable relative to the conveyor, a motor to drive the chains slower than the conveyor in the longitudinal direction, and cams to move the pushers laterally into contact with the longitudinal side of the articles (known from CH—A—617150), characterised in that said pushers have a trailing surface extending transverse to the direction of movement of the conveyor and an engaging surface extending in the direction of movement of the conveyor and are positioned longitudinally relative to the articles on the conveyor so as to contact initially only a portion of the longitudinal side of the article which is spaced downstream of the trailing side of the article, the trailing surface of said pushers being spaced downstream from the leading side of the following article to prevent contact betweeen the following article and said trailing surface as the article is being laterally moved to prevent rotary movement of said following article, in that the speed difference between the pushers and the conveyor causes the articles to move longitudinally relative to said pushers and eventually to contact the engaging surface of the next downstream pusher after substantial lateral movement of said article, and by stabilising means for preventing rotation of the articles as said pushers are laterally withdrawn relative to said conveyor.

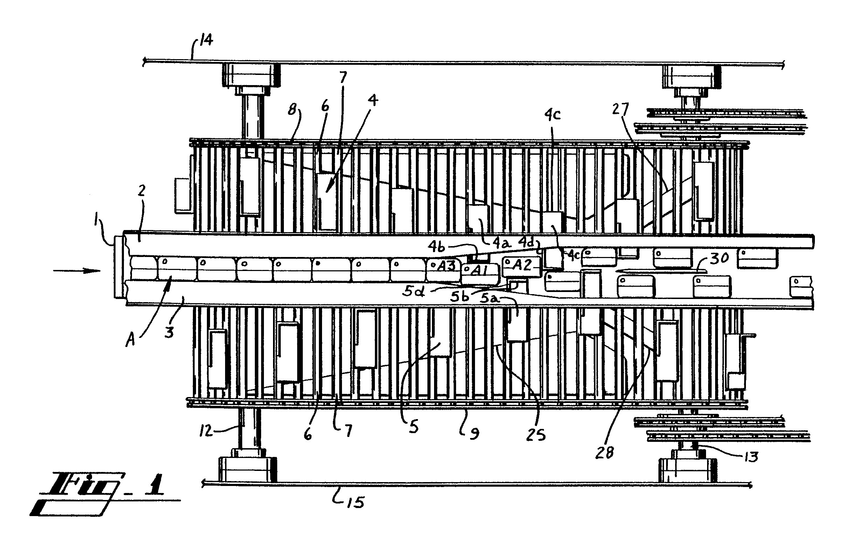

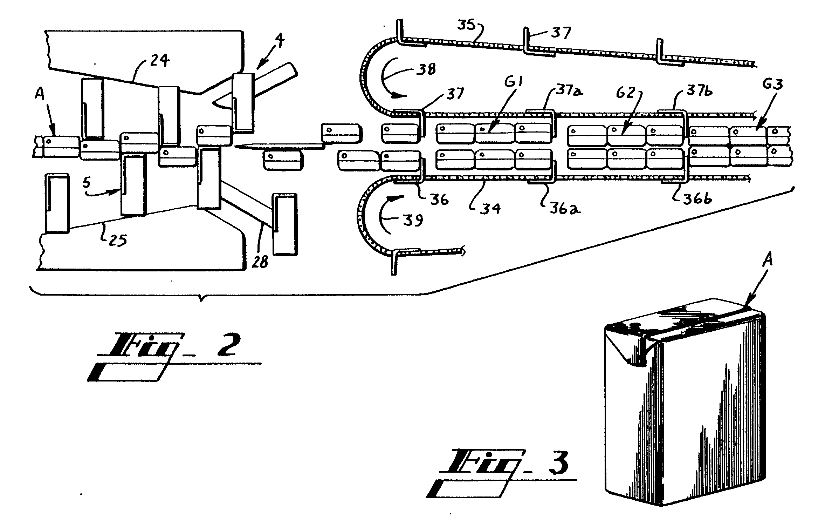

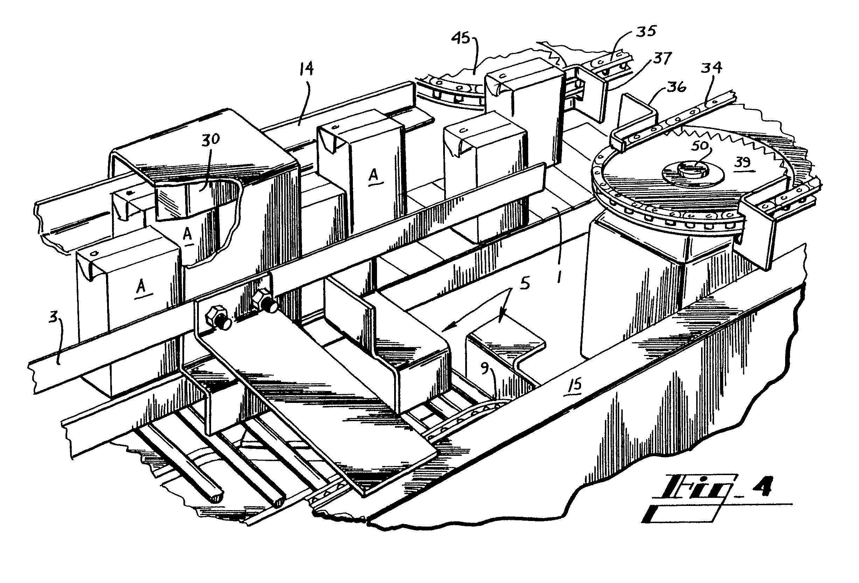

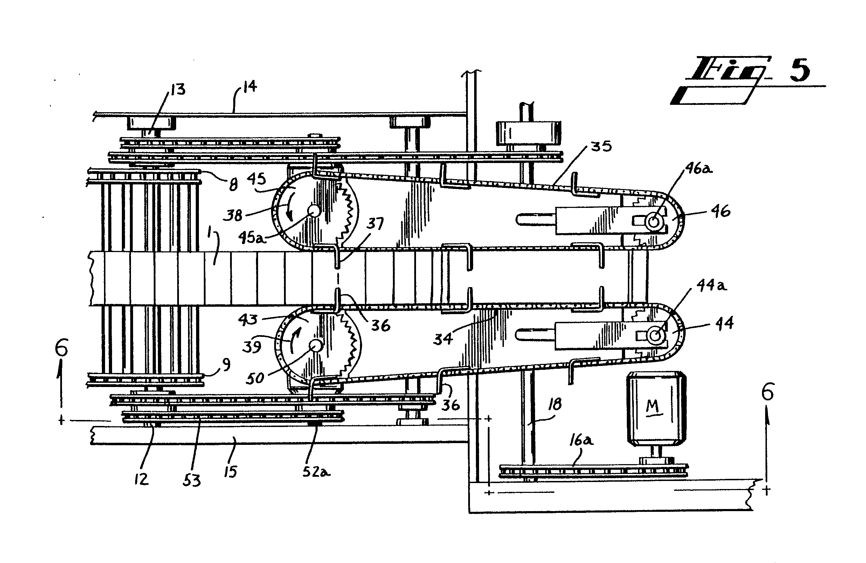

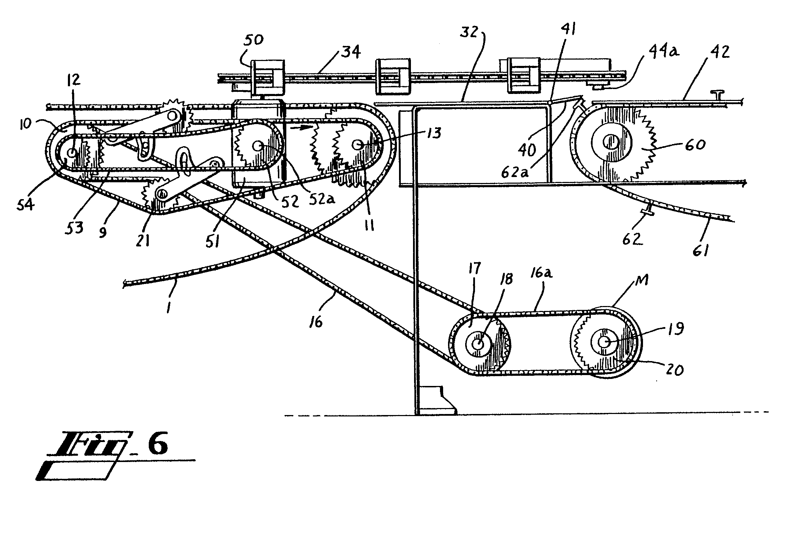

In the drawings, figure 1 is a plan view of a portion of a machine constructed in accordance with this invention; Figure 2 is a plan view of the outfeed portion of the machine of figure 1 and shows schematically certain parts of the machine shown in Figure 1; Figure 3 is a perspective view of a package in the form of a six sided cube to which the invention is particularly applicable; Figure 4 is a perspective view showing parts of the mechanism shown in FIGS. 1 and 2; FIG. 5 is a plan view in schematic form of parts of the mechanisms shown in FIGS. 1 and 2 but with certain parts removed for clarity and FIG. 6 is a side view of the mechanism shown in FIGS. 1, 2 and 5 with parts eliminated but which shows essential driving elements of the machine.

As is best shown in FIGS. 1, 5 and 6 an infeed conveyor 1 is arranged with its upper working reach movable from left to right so as to impart left to right movement of articles A arranged in a single row in following relation and in contact with each other. Guide plates 2 and 3 are disposed on either side of the row of articles A and serve to maintain the single row of articles in a stabilized fashion. A plurality of shuttle elements 4 (pushers) are disposed on one side of the path of movement of articles A adjacent the guide 2 while a similar plurality of shuttle elements 5 are movable along the opposite side of the path of movement of articles A and adjacent the guide 3.

Shuttle elements 4 and 5 are for the purpose of imparting movement to preselected articles A which is transverse to the path of movement of the articles. Shuttle 4 is slidably mounted on rods 6 and 7 which in turn are arranged with their ends supported by chains 8 and 9. Chain 9 is an endless element and is supported by sprockets 10 and 11. Chain 8 is similarly mounted on sprockets which are not clearly observable in the drawings but which are rotatable respectively on shafts 12 and 13 supported by frame elements 14 and 15.

From FIG. 6 it is apparent that sprocket 10 is the driving sprocket for chain 9 and that sprocket 10 is rotated by chain 16, by sprocket 17 mounted on shaft 18 which in turn is driven by electric motor M having a shaft 19 and a driving sprocket 20 mounted thereon. Tension of chains 9 and 16 is controlled by tensioning sprocket 21.

Transverse inward movement to shuttle elements 4 and 5 is imparted respectively by cam surfaces 24 and 25 together with a cam follower not shown but which is mounted on each of the shuttles 4 and 5 and which follows the cams 24 and 25 to impart transverse movement inward toward the articles A which are moving along a predetermined path (Fig. 2).

As is apparent from FIG. 1, shuttles 4a and 5a are in the process of imparting transverse movement to articles such as those designated A1 and A2 in FIG. 1.

It should be noted that the engaging surfaces 4b, 5b extending in the direction of movement of the conveyor are in leading spaced relation to the leading surfaces of articles A3 and A1 respectively. This fact insures that transverse movement, for example, of shuttle 4a does not impart sidewise or rotary movement to article A3 about its vertical axis due to friction between the trailing surface 4d of shuttle 4a and the leading surface of article A3. In like fashion the trailing surface 5d of shuttle 5a does not impart undesired sidewise or rotary movement to article A1.

Once transverse movement of an article such as A2 is completed, however, the trailing surface 4d of shuttle 4c is in direct contact with the leading surface of article A2. From this relationship it is apparent that at this point shuttle 4c is holding back the line pressure of the articles A moving from left to right, since the end feed conveyor 1 moves at a faster rate from left to right than do the shuttles 4 and 5. In like fashion shuttle 5a will soon occupy a position such that its trailing surface 5d subsequently engages the leading surface of article A1 and shuttle 5a will then hold back the line pressure of articles A moving on conveyor 1.

Once transverse movement of each article is completed by its associated shuttle, that shuttle is withdrawn by withdrawing means indicated by the numerals 27 and 28. These withdrawing elements simply constitute fixed cams which engage cam followers not shown from each shuttle so that once the desired transverse movement of a particular article is completed its asociated shuttle moves in a transverse direction away from the path of movement of the articles A.

For the purpose of preventing rotation of an article after its movement in a transverse direction is completed due to frictional contact with its shuttle as that shuttle is withdrawn, a suitable stationary stabilizing element 30 is provided and engages the inner surface of each article. At this stage the articles are moving in two rows in slightly spaced apart relation to each other. For receiving the two rows of articles at the outfeed ends of conveyor 1, a fixed dead plate 32 is provided.

For aiding in assembling the articles which are spaced apart as shown in FIG. 2 as they move over the dead plate 32 best shown in FIG 6, a pair of outfeed conveyors 34 and 35 are provided as best shown in FIGS. 2 and 5. Conveyor 34 is provided with a plurality of spaced apart transversely disposed flight bars 36 while conveyor 35 is provided with transversely extending spaced apart flight bars 37. These conveyors move as indicated by the arrows 38 and 39 so that the higher velocity of conveyor 1 causes the group of articles generally designated at G1 in FIG. 2 to accumulate behind the flight bar 37a and the flight bars 36a. This condition is maintained until the group of articles such as G2 moves across the panel 40 which is pivoted at 41 and onto a machine dead plate 42 at which point the articles such as those designated at group G3 in FIG. 2 drift toward the left and thus engage the leading surfaces of flight bars 36b and 37b. Outfeed conveyors 34 and 35 are preferably in the form of chains. Conveyor 34 for example is supported and operated by sprockets 43 and 44 while conveyor 35 is supported and operated by sprockets 45 and 46 mounted respectively on shafts 45a and 46a. Sprocket 43 is mounted on shaft 50 which is driven from gear box 51 shown in FIG. 6 which in turn is driven by sprocket 52, chain 53 and sprocket 54 which in turn is driven by chains 16 an 16a and motor M. Sprocket 44 is mounted on shaft 44a while sprocket 46 is mounted on shaft 46a. Chain 35 is driven by a gear box from sprocket 52 and its associated shaft 52a.

This invention is well suited for use in conjunction with packaging machines which for example constitute means for enveloping groups of articles such for exaple as that indicated at G3 inside a wrapper. Such a machine may include a sprocket 60, a pair of chains 61 having flight bars 62 which in turn move in behind groups of articles such as G3 after having caused the panel 40 to swing in a counterclockwise direction about its pivot 41 due to engagement of a flight bar 62a as is indicated for example in FIG. 6. The invention is particularly well suited for use in conjunction with the metering and grouping of articles which are of cube shaped configuration.

**Claims**

1. Apparatus for arranging articles (A) in two laterally spaced streams from a single stream, which apparatus comprises a conveyor (1) for carrying said articles, chains (8, 9) on each side of the conveyor (1), having longitudinally spaced pushers (4, 5) which are laterally movable relative to the conveyor (1), a motor (M) to drive the chains (8, 9) slower than the conveyor (1) in the longitudinal direction, and cams (24, 25) to move the pushers laterally into contact with the longitudinal side of the articles (A), characterised in that said pushers have a trailing surface (4d) extending transverse to the direction of movement of the conveyor and an engaging surface (46, 5b) extending in the direction of movement of the conveyor and are positioned longitudinally relative to the articles (A) on the conveyor (1) so as to contact initially only a portion of the longitudinal side of the article (A) which is spaced downstream of the trailing side of the article (A), the trailing surface (4d) of said pushers (4, 5) being spaced downstream from the leading side of the following article (A) to prevent contact between the following article (A) and said trailing surface as the article (A) is being laterally moved to prevent rotary movement of said following article (A), in that the speed difference between the pushers (4, 5) and the conveyor (1) causes the articles (A) to move longitudinally relative to said pushers (4, 5) and eventually to contact the engaging surface of the next downstream pusher after substantial lateral movement of said article, and by stabilising means (30) for preventing rotation of the articles as said pushers are laterally withdrawn relative to said conveyor.

2. Apparatus according to claim 1, further characterised in that said stabilising means is stationary.

3. Apparatus according to claim 1 or claim 2, further characterised in that fixed dead plate means (32) is disposed to receive groups of said articles and in that outfeed conveyor means (34, 35) engages the leading parts of said groups of articles in sequence and controls the velocity of movement thereof.

4. Apparatus according to claim 3, further characterised in that said outfeed means (34, 35) eventually engages the trailing parts of said groups of articles and thus imparts movement thereto off said dead plate means.

## Patentansprüche

1. Vorrichtung zum Anordnen von Gegenständen (A) in zwei seitlich voneinander beabstandeten folgen aus einer einzelnen Folge heraus mit einem Förderer (1) zum Tragen der Gegenstände, Ketten (8, 9) an jeder Seite des Förderers (1), die in Längsrichtung voneinander beabstandete Schiebare (4, 5) haben, welche in seitlicher Richtung relativ zum Förderer (1) bewegbar sind, einem Motor (M) zum Antreiben der Ketten (8, 9) in der Längsrichtung mit geringerer Geschwindigkeit als derjenigen des Förderers (1) und Kurven (24, 25), um die Schieber seitlich in Berührung mit der Längsseite der Gegenstände (A) zu bewegen, dadurch gekennzeichnet, daß die Schieber (4, 5) eine sich quer zur Bewegungsrichtung des Förderers erstreckende Eingriffsfläche (4d) und eine sich in Bewegungsrichtung des Förderers erstreckende Eingriffsfläche (4b, 5b) aufweisen und in Längrichtung derart in Bezug zu den Gegenständen (A) auf dem Förderer (1) angeordnet sind, daß sie von der Längsseite des Gegenstandes (A) anfangs nur einen Teil berühren, der sich in Förderrichtung im Abstand von der nachlaufenden Seite des Gegenstandes (A) befindet, wobei sich die Eingriffsfläche (4d) des Schiebers (4, 5) in Förderrichtung im Abstand von der Vorlaufseite des nachfolgenden Gegenstandes (A) befindet, um eine Berührung zwischen dem nachfolgenden Gegenstand und der Eingriffsfläche des Schiebers (4, 5) zu vermeiden, wenn der Gegenstand (A) seitlich bewegt wird, um eine Drehbewegung des nachfolgenden Gegenstandes (A) zu verhindern, daß die Geschwindigkeitsdifferenz zwischen den Schiebern (4, 5) und dem Förderer (1) die Gegenstände (A) veranlaßt, sich in Längsrichtung relativ zu den Schiebern (4, 5) zu bewegen und schließlich nach wesentlicher Querbewegung des Gegenstandes die Eingriffsfläche des in Förderrichtung nächsten Schiebers zu berühren, und durch Stabilisierungsmittel (30) zum Verhindern einer Drehung der Gegenstände, wenn die Schieber relativ zum Förderer seitlich zurückgezogen werden.

2. Vorrichtung nach Anspruch 1, dadurch gekennzeichnet, daß die Stabilisierungsmittel stationär sind.

3. Vorrichtung nach Ansprruch 1 oder 2, dadurch gekennzeichnet, daß feste Auflageplatten-Mittel (32) vorgesehen sind, um Gruppen der Gegenstände aufzunehmen, und daß Abzugsfördermittel (34, 35) die vorlaufenden Teile der Gruppen von Gegenständen der Reihe nach in Eingriff nehmen und die Geschwindigkeit von deren Bewegung steuern.

4. Vorrichtung nach Ansprruch 3, dadurch gekennzeichnet, daß die Abzugsmittel (34, 35) die nachlaufenden Teile der Gruppen von Gegenständen erfassen und diesen eine Bewegung von den Auflageplatten-Mitteln weg erteilen.

## Revendications

1. Dispositif adapté pour disposer des objets ou articles (A), provenant d'une seule file, sur deux files écartées latéralement, ce dispositif comprenant un convoyeur (1) de transport de ces articles, des chaines (8, 9) situées de chaque coté de ce convoyeur (1) et comportant des éléments poussoirs (4, 5) espacés longitudinalement et qui sont mobiles latéralement par rapport à ce convoyeur, un moteur (M) adapté pour entrainer les chaines (8, 9) dans le sens longitudinal plus lentement que le convoyeur, et des cames (24, 25) adaptées pour déplacer les poussoirs latéralement en contact avec le coté longitudinale des articles (A), dispositif caractérisé par le fait que les éléments poussoirs (4, 5) ont une surface arriére ou de talon (4d, 5d) s'étendant transversalement à la direction de déplacement du convoyeur et une surface de contact (4b, 5b) s'étendant dans la direction de déplacement de ce dernier, ces éléments poussoirs (4, 5) étant situés longitudinalement par rapport aux articles (A) sur le convoyeur (1) afin de rentrer initialement en contact seulement avec une partie du coté longitudinal d'un article (A) qui est écartée en aval du coté arriére de celui-ci (A), la surface arriére (4d, 5d) des éléments poussoirs (4, 5) étant écartée en aval du coté avant de l'article suivant afin d'empécher tout contact entre cet article suivant et cette surface arriére afin d'éviter un mouvement rotatif de cet article alors qu'il est dèplacé latéralement, la différence de vitesse entre les éléments poussoirs (4, 5) et le convoyeur (1) amenant chaque article (A) à se déplacer longitudinalement par rapport aux poussoirs (4, 5) et éventuellement à entrere en contact avec la surface de contact du prochain élément poussoir aval aprés un déplacement latéral sensible de l'article concerné, un moyen de stabilisation (30) étant prévu pour empecher la mise en rotation des articles lorsque les éléments poussoirs sont reculés latéralement par rapport au convoyeur.

2. Dispositif selon la revendication 1, caractérisé par le fait que le moyen de stabilisation (30) est fixe.

3. Dispositif selon l'une ou des revendications 1 ou 2, caractérisé par le fait qu'il comporte un plaque fixe (32) de limitation située pour recevoir des groupes d'articles, et que des convoyeurs d'évacuation (34, 35) sont prévus pour prendre contact séquentiellement avec les parties avant des groupes d'articles et commander la vitesse de déplacement de ceux-ci.

4. Dispositif selon la revendication 3, caractérisé par le fait que les convoyeurs d'évacuation (34, 35) sont prévus pour prendre contact éventuellement avec les parties arriéres des groupes d'articles et ainsi de les déplacer hors de la plaque fixe de limitation.

Fig_1

0 122 065

Fig. 2

Fig. 3

Fig. 4

Fig 5

0 122 065

Fig. 6